# EUROPEAN PATENT SPECIFICATION

(11) **EP 3 323 051 B1**
(45) Date of publication and mention of the grant of the patent: **29.03.2023**
(21) Application number: 16742533.9
(22) Date of filing: 14.07.2016
(51) Int. Cl.: G06F 13/10, G06F 13/16, G06F 13/40, G06F 13/42

(54) **SPI INTERFACE WITH LESS-THAN-8-BIT BYTES AND VARIABLE PACKET SIZE**
SPI-SCHNITTSTELLE MIT BYTES MIT WENIGER ALS 8 BIT UND VARIABLER PAKETGRÖSSE
INTERFACE SPI COMPORTANT DES OCTETS DE MOINS DE 8 BITS ET UNE TAILLE DE PAQUETS VARIABLE

(30) Priority: 15.07.2015 US 201562192773 P; 13.07.2016 US 201615209467
(43) Date of publication of application: 23.05.2018
(73) Proprietor: Microchip Technology Incorporated, Chandler, AZ 85224-6199 (US)
(72) Inventor: KILZER, Kevin, Chandler, Arizona 85225 (US); RAMANATHAN, Shyamsunder, Tucson, Arizona 85741 (US); RAJARAMAN, Sai Karthik, Chandler, Arizona 85249 (US); MILKS, Justin, Tempe, Arizona 85283 (US)
(74) Representative: sgb europe
(86) International application number: PCT/US2016/042196
(87) International publication number: WO 2017/011621

(56) References cited:
- EP-A1- 1 136 268
- US-A1- 2012 166 677
- US-A1- 2013 315 288
- US-B1- 8 135 881
- US-B2- 7 610 135

## Description

The present disclosure relates to synchronous serial peripheral interface, in particular an SPI interface with less than 8-bit bytes and variable packet size

Document US 7 610 135 B2 discloses data transmission on a communication channel having a predetermined transmission band. Document US 8 135 881 B1 discloses a SPI controller performing read and write operations upon registers in response to signals received via one or more of a data signal line, a clock signal line and a select signal line. Document US 2013/315288 A1 discloses transmission techniques using buffers.

Synchronous serial peripheral devices use separate data and clock lines, wherein a minimum data size is 8-bit. The devices are common interface peripherals in microcontrollers. They may also be used in a plurality of stand-alone devices, such as analog-to-digital converters, digital-to-analog converters, sensor devices, transmitters and receivers and any other type of device that needs to communicate with a microprocessor or microcontroller.

There is a need for an improved more flexible SPI interface that to a great extent handles a serial transmission with variable data width automatically. This and other objects can be achieved by a synchronous serial peripheral device and method as defined in the independent claims. Further enhancements are characterized in the dependent claims.
Fig. 1 shows a block diagram of an embodiment of a synchronous serial peripheral module;
Fig. 2 shows a system with a master and a plurality of slave units coupled through an SPI interface;
Fig. 3 shows a timing diagram of a conventional SPI transmission;
Fig. 4 shows a timing diagram of an SPI transmission with less than eight bits according to a first operating mode;
Fig. 5 shows a timing diagram of an SPI transmission according to a second operating mode;
Fig. 6 shows a typical transmission protocol used for an in-circuit debugger/programmer;
Fig. 7 shows a transmission according to a first operating mode that emulates a PWM/Manchester encoding;
Fig. 8 shows a first configuration of a conventional SPI module;
Fig. 9 shows a second configuration of a conventional SPI module; and
Fig. 10, shows a block diagram of a microcontroller comprising an SPI module according to various embodiments.

Applications employing RF transmission of serial data are improved if the transmitter sends only the bits necessary. When devices can generate serial data using only 8-bit bytes, then sometimes excess bits must be transmitted (e.g., 32 or 40 bits), instead of the optimal number (e.g., 37 bits). The extra bits add to the total energy consumed, and take away from battery life.

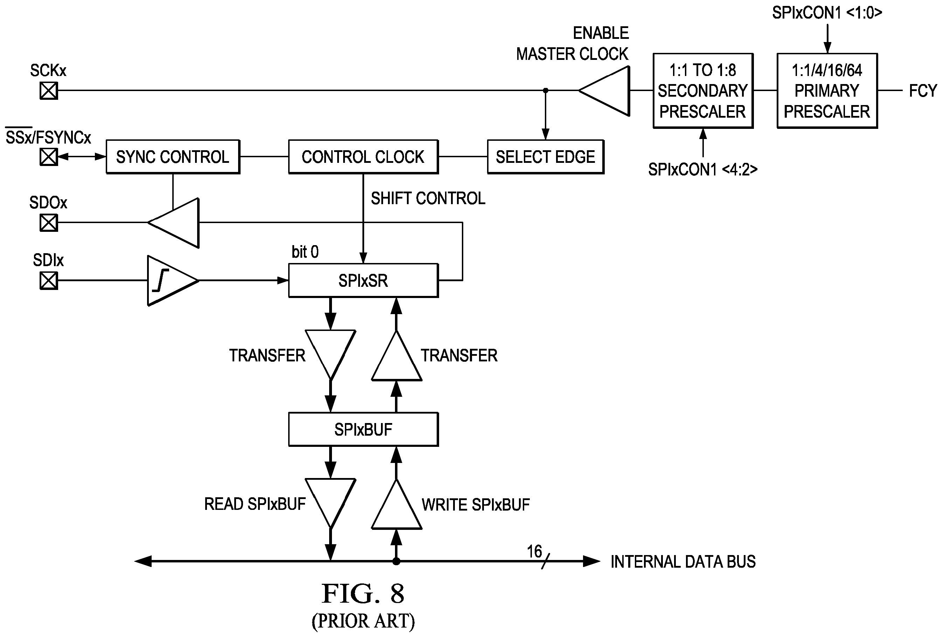

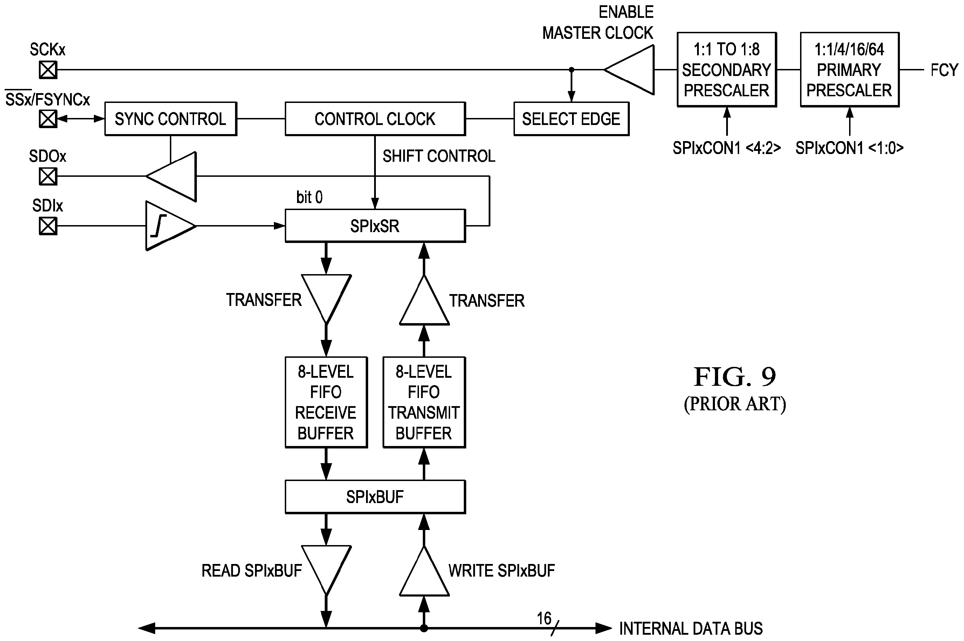

Figures 8 and 9 show a typical SPI peripheral module that can be implemented in a microcontroller. Such a peripheral may operate in different modes wherein a normal mode as shown in Fig. 8 uses a single buffer register SPIxBUF coupled with a shift register SPIxSR which again is coupled with external pins SDO and SDI. The shift register operates as a serializer and a de-serializer as shown in Figs. 8 and 9. The clock signal is generated through prescalers and control logic is provided that handles the transfer protocols of signals on the SDO, SDI and SCK pins. According to the standard a fourth pin may be used for slave mode or frame synchronization. Fig. 9 shows the same module when operating in an enhanced mode. Now a FIFO receive and transmit buffer is coupled between the buffer register SPIxBUF and the shift register SPIxSR. Thus, a user can perform multiple writes which depends on the FIFO size with no timing constraints (wait states). Such a peripheral is typically configured by special function registers which are memory-mapped for easy access within a microcontroller. However, these type of SPI interfaces are limited to 8-bit or 16-bit transmissions. Currently, the only way to provide a variable bit length serial transmission is to use the so-called bit-banging technology which requires the central processor to directly control an I/O port and the timing of the signals which obviously results in a significant software overhead.

There is a need for an improved more flexible SPI interface that to a great extent handles a serial transmission with variable data width automatically.

According to various embodiments, an SPI module as shown in Figs. 8 and 9 can be further enhanced. For example, the SPI data serializer and deserializer can be modified so that not all bytes that are transmitted need be 8 bits long. To this end, a special function register that controls the operation of the SPI peripheral is controlled amongst others, for example, by a single mode bit or multiple bits that control a specific setting. Using a single bit BMODE allows for two modes. When BMODE=0, a total bit count is specified, for example, a transmission having a length of 37 bits. The actual length may be set in a special function register. In this mode, after transmitting a plurality of 8-bit bytes, a final byte, for example in one setting the 5th byte, is truncated to the necessary length. Thus, four normal 8-bit words and one 5-bit word would be sequentially transmitted to result in a 37 bit transmission.

When BMODE=1, each byte is truncated to a selected bit-count. This mode allows to define every transmission to be made with less than 8 bits. However, the setting could be between 1-8 bits with the 8-bit setting being equivalent to a normal transmission.

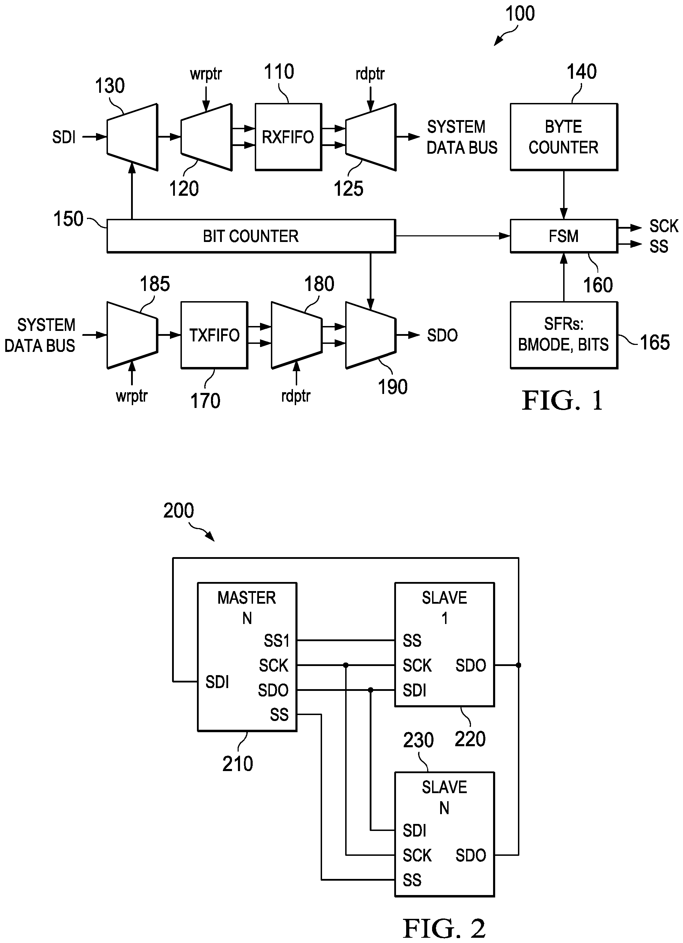

According to one embodiment, only a single operating mode is provided wherein this mode is equivalent to the BMODE=1. This embodiment does not require a FIFO memory as discussed below with a two operating mode embodiment but may be implemented similar to the SPI peripheral shown in Fig. 8. Thus, instead of a FIFO, a single transmit buffer register and a single transmit receive register, similar to the arrangement shown in Fig. 8, may be provided instead of the FIFO multiplexer arrangement as shown in Fig. 1.

Thus, a SPI module according to various embodiments allows data transfers of variable size. As mentioned above, according to one embodiment, there can be two modes implemented to achieve variable transfer size:
- Mode 1 - Variable packet size mode. The packet size can, for example, be between 9 to 16391 bits. Other packet sizes may apply depending on the implementation.
- Mode 2 - Variable byte size mode. The size of each byte can be between 1 to 8 bits.

Efficient implementation for variable byte size is achieved using a bit selector to directly multiplex transmit FIFO data onto an SDO output and to receive SDI input signals via a de-serializer and an associated receive FIFO. In addition, a master mode finite state machine uses the byte_count and bit_count information to generate variable number of SCK pulses. Fig. 1 shows a block diagram of a synchronous serial peripheral device 100 according to an embodiment.

A first de-serializer 130 receives a serial SDI signal and forwards a parallel 8-bit signal to a first multiplexer 120 which is coupled with a N-deep receive FIFO 110. De-serializer 130 is controlled by bit counter 150 which also controls finite state machine 160 which outputs clock signal SCK. Finite State machine 160 is further coupled with byte counter 140. An N-deep transmit FIFO 170 is coupled with multiplexer 180 which outputs an 8-bit parallel signal to serializer 190 whose output provides the SDO signal.

The ability to both truncate bytes and complete a data load/store operation is performed with 8 bits per byte, but requires special consideration in the data controls. In particular, transferring only 1-bit per byte is very difficult while maintaining continuous data clocking (a requirement for the RF transmission). The bit counter interacts with the finite state machine, and the transmitter and receiver, to make sure that all are in the same state.

Operation of such a synchronous serial peripheral device in "Master mode" may be as follows. First, the synchronous serial peripheral device is configured to operate in one of the two operating modes unless only a single mode is available as discussed above. In a first transmission mode, a transmission bit width to a length of up to 8 bits is set. If a FIFO or a transfer buffer is used to receive the data, each such transfer may trigger a transmission. In case of a FIFO, the peripheral will simply transfer as long as there is valid data in the FIFO. Thus, upon receiving the data the synchronous serial peripheral device transmits data on a data line and an associated clock signal on a clock line, wherein a number of bits which is less than 8 bits is transmitted on the data line and an associated number of clock pulses is transmitted on the clock line.

Operation of such a synchronous serial peripheral device in "Slave mode" may be as follows. First, the synchronous serial peripheral device is configured to operate in one of the two operating modes unless only a single mode is available as discussed above. In a first transmission mode, a transmission bit width to a length of up to 8 bits is set. The peripheral will simply transfer once it receives the clocks from the master provided there is data in the FIFO. Thus, upon receiving the clock from the master the synchronous serial peripheral device transmits data on a data line, wherein a number of bits which is less than 8 bits is transmitted on the data line.

In the second transmission mode, a number of 8-bit words and a bit width to length less than 8 bits is first programmed into the respective special function register or registers. Then, data is moved into the transmission FIFO memory which may require a plurality of data transfers depending on the overall bit length of the transmission. Thus, in this operating mode, the synchronous serial peripheral device transmits a plurality of 8-bit words from the transmission FIFO memory followed by a single data transmission word having a data length that can be defined to be less than eight (8) bit. The transfer may automatically begin, according to one embodiment, once enough data has been received in the FIFO. According to another embodiment, a single bit in a configuration register which can be set by a user determines the start of transfer.

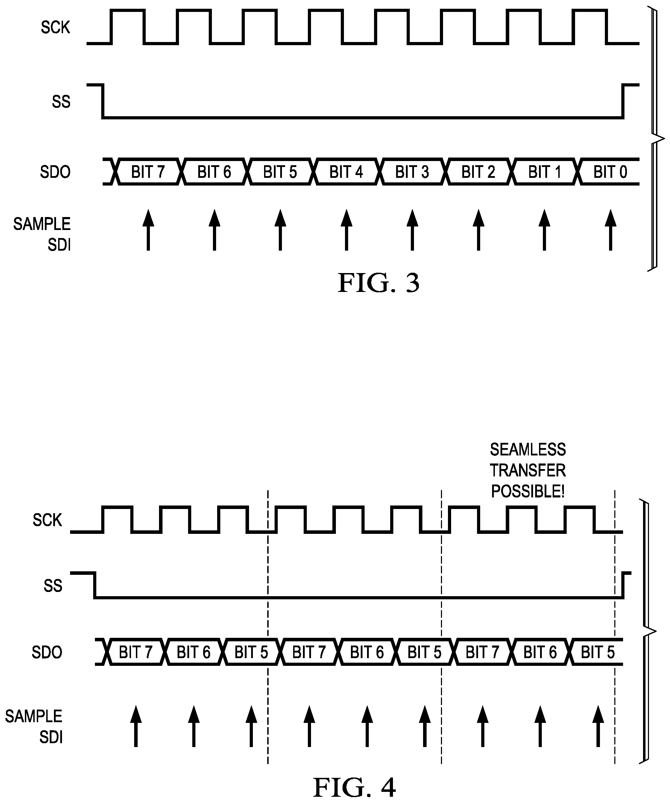

SPI transfers data serially between multiple devices. Fig. 2 shows a typical arrangement 200 with a master 210 and a plurality of slaves 220, 230. The serial output data is changed on a particular SCK edge and the data is sampled on the next SCK edge as shown in the timing diagram of Fig. 3. Conventional SPI systems transfer data word-wise, where the word size = data bus width (8 bit MCU => 8 bit SPI bytes). Some systems also offer a data transfer width of 16 bit.

According to an embodiment, a packet-size option can be implemented which provides a feature that is not currently available in conventional SPI interfaces.

As shown in Fig. 4, The SPI peripheral has a byte transfer mode according to a specific programmable operating mode, wherein each transfer involves sending/receiving one byte. The size of each byte can be between 1 to 8 bits. A respective special function register (SFR) controls this function: This register can be programmed for example by a single bit BMODE, wherein a setting of BMODE=1 is used for a byte mode, and a plurality of bits (BITS ) in this or another special function register define the number of bits for the byte size. Example as shown in Fig. 4: the control register has a setting of BMODE=1, BITS=3. In this mode only 3 bits, namely the most significant bits 7, 6, and 5, are transferred with each writing to the buffer transfer register.

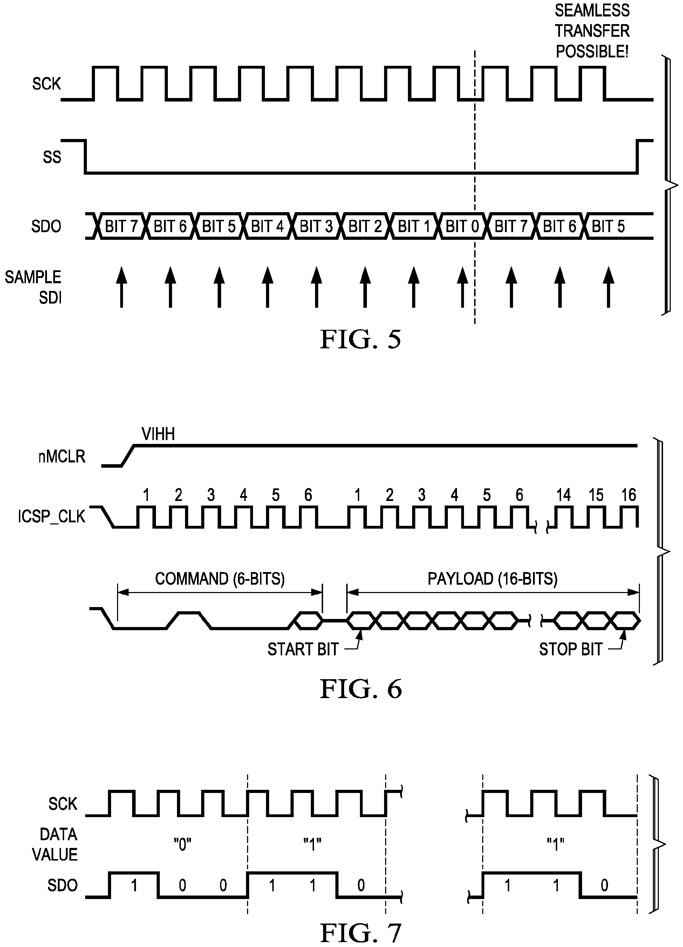

As shown in Fig. 5, The SPI peripheral may also have a packet transfer mode according to specific programmable operating mode. The packet size can be between 9 to 16391 bits. However, as stated above, other sizes may apply depending on the implementation. A number of special function registers (SFR) may be used to control the setting. For example, bit BMODE=0 is used to set the packet mode, bits BYTES are used to set the number of 8-bit bytes, and bits BITS are used to set the size of the last byte. This results in a packet size (in number of bits) = BYTES*8 + BITS. The example as shown in Fig. 5 uses the setting BMODE=0, BYTES=1, and BITS=3 which results in an 11-bit operating mode.

As shown in Fig. 6, for example, a Microchip In Circuit Serial Programming (ICSP) requires a 6-bit command to be sent followed by a 16-bit payload. The first byte can be sent using BMODE=1, BITS=6 and the next two bytes can be sent using BMODE=1, BITS=0. Alternatively, this can be achieved using the packet mode with BMODE=0, BYTES=2, BITS=6 (packet size = 22 bits). This enables certain microcontrollers to be used for Microchip PIC programming, which requires variable bit-length words to be transferred.

Wireless applications that require odd number of bits to be transferred can benefit from the new packet mode. For example, Keeloq^{®} applications can have a data size between 66-192 bits. As mentioned above, previously these applications would have to use bit banging for sending packets of exact length in order to save power by turning off the transceiver without any zero-padding overhead. The new packet mode can help in achieving higher timing accuracies than achieved by bit banging approaches. Also the seamless data transfer support can improve the bus utilization and further optimize power consumption.

As shown in Fig. 7, the new SPI module according to an embodiment can be easily used for applications requiring a PWM/Manchester encoding for each bit of data. For example, certain LED devices use the following PWM encoding to represent one bit of data. The baud rate, the number of bits, and the data can be adjusted to achieve the required modulated pattern.

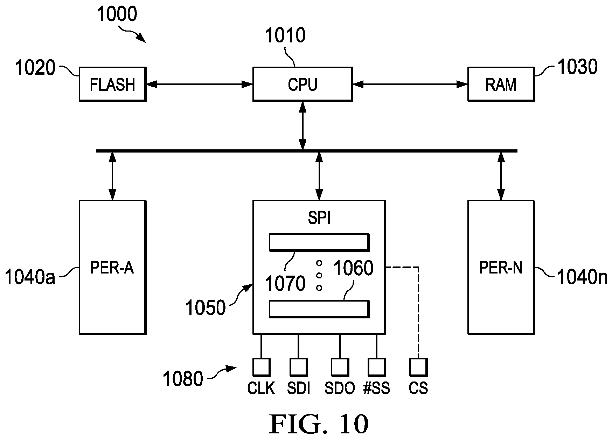

Fig. 10 shows an example of an integration of a SPI module according to various embodiments in a single chip microcontroller 1000. The microcontroller 1000 comprises a central processing unit 1010 coupled with a program flash memory 1020 and a data random access memory 1030 implementing a Harvard architecture. However, other architectures may be used according to other embodiments. An internal system bus 1090 couples the CPU 1010 with a plurality of peripheral devices 1040a..n. One of the peripheral devices 1050 is an SPI module according to various embodiments as described above. It may have a plurality of configuration registers 1060, 1070 that are special function registers of the microcontroller 1000 and may be memory mapped to the data memory 1030. The microcontroller 1000 may have a plurality of external pins that in a default setting operate as digital or analog I/O ports 1080. Some of these pins 1080 may be configurable to be assigned to the SPI module as shown in Fig. 10. For example, one pin CLK may be assigned to transmit or receive a clock signal, one pin SDI may be used as a serial data input pin, one pin SDO may be used as a serial data output pin, and one pin #SS may be used as slave select or frame synchronization pin. When activating the SPI peripheral 1050, a minimum of pins CLK and SDI or SDO may be used. In addition, a CS pin may be used, in particular if more than one slave unit communicates over the same bus. Generally, a plurality of such pins may be required for a master depending on the application and therefore these pins are simply I/O port pins and will be manually set by software. However, some embodiments of an SPI interface module 1050 may automatically control one or more such pins.

## Claims

1. A synchronous serial peripheral device comprising:
a transmission unit (190) coupled with a data output line (SDO) and a clock unit (160) coupled with a clock line (SCK), a transfer buffer (170) coupled with the transmission unit (190), wherein the serial peripheral device is configured to transmits a minimum of a single data transmission consisting of a number of transmission bits, wherein upon receiving data in the transfer buffer (170), in a first operating mode the transmission unit (190) and the clock unit (160) are configurable to perform a data transmission with a data length that can be defined to be less than 8 bits, wherein the single transmission consists of a number of bits less than 8 bits which are transmitted on the data line and an associated number of clock pulses transmitted on the clock line,
wherein the transfer buffer is a FIFO memory (170) coupled with the transmission unit (190), wherein the peripheral device is further configurable to operate in a second operating mode in which a transmission consists of a transmission frame comprising a plurality of 8-bit words from the FIFO memory (170) followed by a single data transmission word from the FIFO memory having a data length that can be defined to be less than eight (8) bit,
a finite state machine (160) controlling a clock signal transmitted on the clock line (CLK) and a byte counter (140) and a bit counter (150) controlling the finite state machine (160),
wherein a special function register is programmable to control the peripheral device to operate in the first or second operating mode,.

2. A method of operating a synchronous serial peripheral device, comprising the steps of:
configuring the synchronous serial peripheral device when operating in a master mode to operate in a first transmission mode in which the serial peripheral device is configured to transmit a minimum of a single data transmission consisting of a number of transmission bits;
setting a transmission data length to length selectable between one (1) and eight (8) bit;
moving data into a transfer buffer (170);
wherein upon receiving said data, the synchronous serial peripheral device transmits data on a data line and an associated clock signal on a clock line, wherein the single data transmission consists of a number of bits less than 8 bits which are transmitted on the data line and an associated number of clock pulses transmitted on the clock line,
wherein the transfer buffer is a FIFO memory (170) coupled with the transmission unit (190), the method further comprising
configuring the synchronous serial peripheral device to operate in a second transmission mode;
setting a number of 8-bit words and a bit width to length less than 8 bits;
moving data into a transmission FIFO memory (170);
wherein upon receiving a trigger, the synchronous serial peripheral device transmits a plurality of 8-bit words from the transmission FIFO memory (170) followed by a single data transmission word having a data length that can be defined to be less than eight (8) bit;
wherein a finite state machine (160) controls a clock signal transmitted on the clock line (CLK) and a byte counter (140) and a bit counter (150) control the finite state machine (160),
and
programming a special function register to control the peripheral device to operate in the first or second transmission mode.

3. The synchronous serial peripheral device or method according to one of the preceding claims, wherein the special function register is a configuration register (165) in which a single bit determines whether the first or second operating mode is active and/or wherein in the first operating mode a plurality bits in the configuration register (165) determine the data length.

4. The synchronous serial peripheral device or method according to one of the preceding claims, further comprising a reception unit (130) coupled with a data input line (SDI), wherein the serial peripheral device is configured to receive a variable bit length single serial data transmission, wherein in the first operating mode the reception unit is configurable to receive a data transmission with the defined data length.

5. The synchronous serial peripheral device or method according to one of the preceding claims, wherein in the second operating mode a first number of special function register bits determine a number of consecutive 8-bit words and a second number of special function register bits determine the number of bits of the single data transmission word after the consecutive 8-bit words have been transmitted.

6. The synchronous serial peripheral device or method according to one of the preceding claims, wherein in the first operating mode a first number of special function register bits determine the data length for each transmission and in the second operating mode a second number of special function register bits determine a number of consecutive 8-bit words and the first number of special function register bits determine the number of bits of the single data transmission word.

7. The synchronous serial peripheral device or method according to claim 6, wherein a single special function register (165) comprises the first and second number of special function register bits.

8. The synchronous serial peripheral device or method according to one of the preceding claims, wherein the bit counter also controls the transmission unit.

9. The synchronous serial peripheral device or method according to one of the preceding claims, wherein a PWM/Manchester encoding for each bit of data is emulated by adjusting the baud rate, the number of bits, and the data to achieve the required modulated pattern.

10. The synchronous serial peripheral device or method according to one of the preceding claims, further comprising a slave control input.

11. The method according to one of the method claims 2-10, wherein in slave mode, the synchronous peripheral device transmits data on a data line (SDO) upon receiving clock signal from the master on a clock line (SCK).

12. The method according to one o the method claims 2-11, further comprising:
when in the first operating mode, receiving a data word having said transmission bit width, and
when in the second operating mode, receiving said number of 8-bit words and a final word having a length of less than eight bits, wherein each received word is transferred into a reception FIFO memory (170).

13. A microcontroller comprising a synchronous serial peripheral device according to one of the preceding claims 1-10.

## Patentansprüche

1. Synchrone serielle Peripheriegerätevorrichtung, die aufweist:
eine mit einer Datenausgangsleitung (SDO) gekoppelte Übertragungseinheit (190) und eine mit einer Taktleitung (SCK) gekoppelte Takteinheit (160), einen mit der Übertragungseinheit (190) gekoppelten Übertragungspuffer (170), wobei die serielle Peripheriegerätevorrichtung ausgebildet ist, ein Minimum einer einzelnen Datenübertragung zu übertragen, die aus einer Anzahl von Übertragungsbits besteht, wobei beim Empfangen von Daten in dem Übertragungspuffer (170) in einem ersten Betriebsmodus die Übertragungseinheit (190) und die Takteinheit (160) konfigurierbar sind, um eine Datenübertragung mit einer auf weniger als 8 Bit definierbaren Datenlänge durchzuführen, wobei die einzelne Übertragung aus einer Anzahl von Bits kleiner als 8 Bits, die auf der Datenleitung übertragen werden, und einer zugehörigen Anzahl von Taktimpulsen besteht, die auf der Taktleitung übertragen werden,
wobei der Übertragungspuffer ein FIFO-Speicher (170) ist, der mit der Übertragungseinheit (190) gekoppelt ist, wobei die Peripheriegerätevorrichtung weiterhin konfigurierbar ist, um in einem zweiten Betriebsmodus zu arbeiten, in dem eine Übertragung aus einem Übertragungsblock besteht, der eine Vielzahl von 8-Bit-Worten aus dem FIFO-Speicher (170) aufweist, gefolgt von einem einzelnen Datenübertragungswort aus dem FIFO-Speicher, das eine Datenlänge aufweist, die auf weniger als acht (8) Bit definiert werden kann,
eine endliche Zustandsmaschine (160), die ein auf der Taktleitung (CLK) übertragenes Taktsignal steuert, und einen Bytezähler (140) und einen Bitzähler (150), die die Zustandsmaschine (160) steuern,
wobei ein Spezialfunktionsregister programmierbar ist, um die Peripheriegerätevorrichtung so zu steuern, dass sie in dem ersten oder zweiten Betriebsmodus arbeitet.

2. Verfahren zum Betreiben einer synchronen seriellen Peripheriegerätevorrichtung, das die Schritte aufweist:
Konfigurieren der synchronen seriellen Peripheriegerätevorrichtung, wenn sie in einem Mastermodus arbeitet, um in einem ersten Übertragungsmodus zu arbeiten, in dem die serielle Peripheriegerätevorrichtung ausgebildet ist, ein Minimum einer einzelnen Datenübertragung zu übertragen, die aus einer Anzahl von Übertragungsbits besteht;
Einstellen einer Übertragungsdatenlänge auf eine Länge, die zwischen einem (1) und acht (8) Bit wählbar ist;
Verschieben von Daten in einen Übertragungspuffer (170);
wobei beim Empfang der Daten die synchrone serielle Peripheriegerätevorrichtung Daten auf einer Datenleitung und ein zugehöriges Taktsignal auf einer Taktleitung überträgt, wobei die einzelne Datenübertragung aus einer Anzahl von Bits kleiner als 8 Bits, die auf der Datenleitung übertragen werden, und einer zugeordneten Anzahl von auf der Taktleitung übertragenen Taktimpulsen besteht,
wobei der Übertragungspuffer ein FIFO-Speicher (170) ist, der mit der Übertragungseinheit (190) gekoppelt ist, wobei das Verfahren weiterhin aufweist
Konfigurieren der synchronen seriellen Peripheriegerätevorrichtung, um in einem zweiten Übertragungsmodus zu arbeiten;
Einstellen einer Anzahl von 8-Bit-Wörtern und einer Bitbreite auf eine Länge von weniger als 8 Bit;
Verschieben von Daten in einen Übertragungs-FIFO-Speicher (170);
wobei bei Empfang eines Triggers die synchrone serielle Peripheriegerätevorrichtung eine Vielzahl von 8-Bit-Wörtern aus dem Übertragungs-FIFO-Speicher (170) überträgt, gefolgt von einem einzelnen Datenübertragungswort mit einer Datenlänge, die auf weniger als acht (8) definiert werden kann;
wobei eine endliche Zustandsmaschine (160) ein auf der Taktleitung (CLK) übertragenes Taktsignal steuert und ein Bytezähler (140) und ein Bitzähler (150) die endliche Zustandsmaschine (160) steuern,
und
Programmieren eines Spezialfunktionsregisters, um das Peripheriegerät so zu steuern, dass es in dem ersten oder zweiten Übertragungsmodus arbeitet.

3. Synchrone serielle Peripheriegerätevorrichtung oder Verfahren nach einem der vorhergehenden Ansprüche, wobei das Spezialfunktionsregister ein Konfigurationsregister (165) ist, in dem ein einzelnes Bit bestimmt, ob der erste oder der zweite Betriebsmodus aktiv ist, und/oder wobei in dem erste Betriebsmodus eine Vielzahl von Bits im Konfigurationsregister (165) die Datenlänge bestimmen.

4. Synchrone serielle Peripheriegerätevorrichtung oder Verfahren nach einem der vorhergehenden Ansprüche, weiterhin aufweisend eine Empfangseinheit (130), die mit einer Dateneingangsleitung (SDI) gekoppelt ist, wobei die serielle Peripheriegerätevorrichtung ausgebildet ist, um eine einzelne serielle Datenübertragung mit variabler Bitlänge zu empfangen, wobei im ersten Betriebsmodus die Empfangseinheit konfigurierbar ist, eine Datenübertragung mit der definierten Datenlänge zu empfangen.

5. Synchrone serielle Peripheriegerätevorrichtung oder Verfahren nach einem der vorhergehenden Ansprüche, wobei im zweiten Betriebsmodus eine erste Anzahl von Spezialfunktionsregisterbits eine Anzahl von aufeinanderfolgenden 8-Bit-Wörtern bestimmt und eine zweite Anzahl von Spezialfunktionsregisterbits die Anzahl der Bits des einzelnen Datenübertragungsworts bestimmt, nachdem die aufeinanderfolgenden 8-Bit-Wörter übertragen wurden.

6. Synchrone serielle Peripheriegerätevorrichtung oder Verfahren nach einem der vorhergehenden Ansprüche, wobei im ersten Betriebsmodus eine erste Anzahl von Sonderfunktionsregisterbits die Datenlänge für jede Übertragung bestimmt und im zweiten Betriebsmodus eine zweite Anzahl von Spezialfunktionsregisterbits eine Anzahl aufeinanderfolgender 8-Bit-Wörter bestimmt und die erste Anzahl von Spezialfunktionsregisterbits die Anzahl von Bits des einzelnen Datenübertragungsworts bestimmt.

7. Synchrone serielle Peripheriegerätevorrichtung oder Verfahren nach Anspruch 6, wobei ein einzelnes Spezialfunktionsregister (165) die erste und zweite Anzahl von Spezialfunktionsregisterbits aufweist.

8. Synchrone serielle Peripheriegerätevorrichtung oder Verfahren nach einem der vorhergehenden Ansprüche, wobei der Bitzähler auch die Übertragungseinheit steuert.

9. Synchrone serielle Peripheriegerätevorrichtung oder Verfahren nach einem der vorhergehenden Ansprüche, wobei eine PWM-/Manchester-Codierung für jedes Datenbit emuliert wird, indem die Baudrate, die Anzahl von Bits und die Daten angepasst werden, um das erforderliche modulierte Muster zu erzielen.

10. Synchrone serielle Peripheriegerätevorrichtung oder Verfahren nach einem der vorhergehenden Ansprüche, die weiterhin einen Slave-Steuereingang aufweisen.

11. Verfahren nach einem der Verfahrensansprüche 2 bis 10, wobei im Slave-Modus die synchrone Peripheriegerätevorrichtung Daten auf einer Datenleitung (SDO) überträgt, wenn sie auf einer Taktleitung (SCK) ein Taktsignal von dem Master empfängt.

12. Verfahren nach einem der Verfahrensansprüche 2 bis 11, das weiterhin aufweist:
wenn im ersten Betriebsmodus, dann Empfangen eines Datenworts, das die Übertragungsbitbreite aufweist, und
wenn im zweiten Betriebsmodus, dann Empfangen der Anzahl von 8-Bit-Wörtern und eines Endworts, das eine Länge von weniger als acht Bit aufweist, wobei jedes empfangene Wort in einen Empfangs-FIFO-Speicher (170) übertragen wird.

13. Mikrocontroller, der eine synchrone serielle Peripheriegerätevorrichtung nach einem der vorhergehenden Ansprüche 1 bis 10 aufweist.

## Revendications

1. Dispositif périphérique série synchrone comprenant :
une unité de transmission (190) couplée à une ligne de sortie de données (SDO) et une unité d'horloge (160) couplée à une ligne d'horloge (SCK), un tampon de transfert (170) couplé à l'unité de transmission (190), dans lequel le dispositif périphérique série est configuré pour transmettre un minimum d'une transmission unique de données consistant en un nombre de bits de transmission, dans lequel lors de la réception des données dans le tampon de transfert (170), dans un premier mode opérationnel l'unité de transmission (190) et l'unité d'horloge (160) sont configurables afin d'exécuter une transmission de données avec une longueur de données qui peut être définie de façon à être inférieure à 8 bits, dans lequel la transmission unique consiste en un nombre de bits inférieur à 8 bits qui sont transmis sur la ligne de données et en un nombre associé de signaux d'horloge transmis sur la ligne d'horloge,
dans lequel le tampon de transfert est une mémoire FIFO (170) couplée à l'unité de transmission (190), dans lequel le dispositif périphérique est configurable en outre pour fonctionner dans un second mode opérationnel dans lequel une transmission consiste en une trame de transmission qui comprend une pluralité de mots de 8 bits en provenance de la mémoire FIFO (170) suivis d'un mot de transmission unique de données en provenance de la mémoire FIFO ayant une longueur de données qui peut être définie comme étant inférieure à huit bits (8),
une machine à états finis (160) qui commande un signal d'horloge transmis sur la ligne d'horloge (CLK) et un compteur d'octets (140) et un compteur de bits (150) qui commandent la machine à états finis (160),
dans lequel un registre de fonction spéciale est programmable pour commander le dispositif périphérique afin qu'il fonctionne dans le premier ou dans le second mode opérationnel.

2. Procédé destiné à actionner un dispositif périphérique série synchrone, comprenant les étapes suivantes :
configurer le dispositif périphérique série synchrone quand il fonctionne dans un mode maître afin qu'il fonctionne dans un premier mode de transmission dans lequel le dispositif périphérique série est configuré pour transmettre un minimum d'une transmission unique de données consistant en un nombre de bits de transmission ;
régler une longueur de données de transmission à une longueur pouvant être sélectionnée entre un (1) et huit (8) bits ;
déplacer les données dans un tampon de transfert (170) ;
dans lequel lors de la réception desdites données, le dispositif périphérique série synchrone transmet les données sur une ligne de données et un signal d'horloge associé sur une ligne d'horloge,
dans lequel la transmission unique de données consiste en un nombre de bits inférieur à 8 bits, qui sont transmis sur la ligne de données et en un nombre associé de signaux d'horloge transmis sur la ligne d'horloge,
dans lequel le tampon de transfert est une mémoire FIFO (170) couplée à l'unité de transmission (190),
le procédé comprenant en outre les étapes suivantes :
configurer le dispositif périphérique série synchrone afin qu'il fonctionne dans un second mode de transmission ;
régler un nombre de mots de 8 bits et une largeur de bits à une longueur inférieure à 8 bits ;
déplacer les données dans une mémoire FIFO de transmission (170) ;
dans lequel lors de la réception d'un signal de déclenchement le dispositif périphérique série synchrone transmet une pluralité de mots de 8 bits en provenance de la mémoire FIFO de transmission (170) suivis d'un mot de transmission unique de données qui présente une longueur de données qui peut être définie comme étant inférieure à huit (8) bits ;
dans lequel une machine à états finis (160) commande un signal d'horloge transmis sur la ligne d'horloge (CLK) et un compteur d'octets (140) et un compteur de bits (150) commandent la machine à états finis (160), et
programmer un registre de fonction spéciale pour commander le dispositif périphérique afin qu'il fonctionne dans le premier ou dans le second mode de transmission.

3. Dispositif périphérique série synchrone ou procédé selon l'une quelconque des revendications précédentes, dans lequel le registre de fonction spéciale est un registre de configuration (165) dans lequel un seul bit détermine si le premier ou le second mode opérationnel est actif et/ou dans lequel dans le premier mode opérationnel une pluralité de bits déterminent dans le registre de configuration (165) la longueur des données.

4. Dispositif périphérique série synchrone ou procédé selon l'une quelconque des revendications précédentes, comprenant en outre une unité de réception (130) couplée à une ligne d'entrée de données (SDI), dans lequel le dispositif périphérique série est configuré pour recevoir une transmission unique de données série de longueur binaire variable, dans lequel dans le premier mode opérationnel l'unité de réception est configurable pour recevoir une transmission de données avec la longueur de données définie.

5. Dispositif périphérique série synchrone ou procédé selon l'une quelconque des revendications précédentes, dans lequel dans le second mode opérationnel un premier nombre de bits du registre de fonction spéciale déterminent un nombre de mots de 8 bits consécutifs et un second nombre de bits du registre de fonction spéciale déterminent le nombre de bits du mot de transmission unique de données une fois que les mots de 8 bits consécutifs ont été transmis.

6. Dispositif périphérique série synchrone ou procédé selon l'une quelconque des revendications précédentes, dans lequel dans le premier mode opérationnel un premier nombre de bits du registre de fonction spéciale déterminent la longueur des données de chaque communication et dans le second mode opérationnel un second nombre de bits du registre de fonction spéciale déterminent un nombre de mots de 8 bits consécutifs et le premier nombre de bits du registre de fonction spéciale déterminent le nombre de bits du mot de transmission unique de données.

7. Dispositif périphérique série synchrone ou procédé selon la revendication 6, dans lequel un seul registre de fonction spéciale (165) comprend les premier et second nombres de bits du registre de fonction spéciale.

8. Dispositif périphérique série synchrone ou procédé selon l'une quelconque des revendications précédentes, dans lequel le compteur de bits commande également l'unité de transmission.

9. Dispositif périphérique série synchrone ou procédé selon l'une quelconque des revendications précédentes, dans lequel un codage PWM/Manchester de chaque bit de données est émulé en réglant le débit en bauds, le nombre de bits, et les données afin d'obtenir le motif modulé requis.

10. Dispositif périphérique série synchrone ou procédé selon l'une quelconque des revendications précédentes, comprenant en outre une entrée de commande esclave.

11. Procédé selon l'une quelconque des revendications du procédé 2 à 10, dans lequel dans le mode esclave, le dispositif périphérique synchrone transmet les données sur une ligne de données (SDO) lors de la réception d'un signal d'horloge en provenance du maître sur une ligne d'horloge (SCK).

12. Procédé selon l'une quelconque des revendications du procédé 2 à 11, comprenant en outre les étapes suivantes :
dans le premier mode opérationnel, recevoir un mot de données qui présente ladite largeur de bits de transmission, et
dans le second mode opérationnel, recevoir ledit nombre de mots de 8 bits et un mot final qui présente une longueur inférieure à huit bits, dans lequel chaque mot reçu est transféré dans une mémoire FIFO de réception (170).

13. Microcontrôleur comprenant un dispositif périphérique série synchrone selon l'une quelconque des revendications précédentes 1 à 10.
